# EUROPÄISCHE PATENTSCHRIFT

(11) **EP 1 348 324 B1**
(45) Veröffentlichungstag und Bekanntmachung des Hinweises auf die Patenterteilung: **11.06.2008**
(21) Anmeldenummer: 03005194.0
(22) Anmeldetag: 08.03.2003
(51) Int. Cl.: A01B 73/04

(54) **Mähwerk mit gelenkig gekoppelten Mähbalken**
Mower comprising coupled, articulated cutter bars
Faucheuse à barres de coupe couplées et articulées

(30) Priorität: 28.03.2002 DE 10214332
(43) Veröffentlichungstag der Anmeldung: 01.10.2003
(73) Patentinhaber: CLAAS Saulgau GmbH, 88348 Bad Saulgau (DE)
(72) Erfinder: Boll, Ullrich, 88348 Bad Saulgau (DE)

(56) Entgegenhaltungen:
- EP-A- 0 634 089
- EP-A- 1 008 286
- WO-A-92/09190
- DE-A- 4 225 249
- DE-C- 4 405 858
- US-A- 3 866 689
- US-A- 4 048 790

## Beschreibung

Die Erfindung betrifft ein Mähwerk nach dem Oberbegriff des Anspruchs 1.

Mähwerke insbesondere Kreiselmähwerke der erfindungsgemäßen Gattung mit großen Arbeitsbreiten zum Schneiden von Grünfuttererntegut sind in der Landtechnik als Anbaugeräte für Traktoren oder als Bestandteil selbstfahrender Erntemaschinen bekannt.

Um die zulässige Transportbreite im öffentlichen Verkehr nicht zu überschreiten werden die Mähwerke für die Transportfahrt in eine gegenüber der Arbeitsbreite reduzierte Transportstellung verbracht.

Bekannt dazu sind Mähwerke, deren Mähaggregate in Rahmenkonstruktionen, ausgebildet als Traggestelle, mit dem Trägerfahrzeug gekoppelt und so mit diesem verbunden sind, dass sie mittels Stellantriebe und Klappmechanismen um fahrtrichtungsparallele oder um vertikale Klappachsen von der Arbeitsstellung in die Transportstellung und umgekehrt in die Arbeitsstellung verschwenkt werden können.

In der Druckschrift DE 42 25 249 A1 ist eine Ausführungsform dieser Gattung beschrieben. Eine dort beschriebene Mähmaschine weist drei Mähwerke auf, wobei die beiden äußeren Mähwerke von je einer Schwenkvorrichtung gehalten werden. Die Schwenkvorrichtung stellt die Halterung zwischen dem Traggestell, welches mit dem Dreipunktbock verbunden ist, und dem Maschinenrahmen eines Trommel- oder Scheibenmähwerks dar. Die Schwenkvorrichtung eines jeweils äußeren Mähwerks besteht aus zwei unterschiedlich langen Lenkern, die in Gelenken mit dem Maschinenrahmen und dem Traggestell verbunden sind. Dabei sind die Gelenkpunkte der Lenker weit oberhalb der Schnittebene der Mähklingen angeordnet und dabei so zueinander ausgerichtet, dass die Geraden der Verbindungslinien durch die Gelenkachsen einen Schnittpunkt bilden, der die momentane Lage einer ideellen Drehachse für das Mähwerk bestimmt. Diese Drehachse ist dabei weit entfernt und außerhalb der Mitte des Traggestells liegend.

Aus der Druckschrift US 4 048 790A bzw. DE 24 26 209 A1 ist ebenfalls eine Ausführungsform dieser Gattung bekannt. Die dort beschriebene Mähmaschine weist ebenfalls drei Mäheinheiten auf, wobei die äußeren Mäheinheiten in Gelenkverbindungen nahe der Arbeitswerkzeuge aufgenommen werden, die beidseitig der mittleren Mäheinheit untergebracht sind. Die äußeren Mäheinheiten werden von ie einer Schwenkvorrichtung gehalten, welche zudem die äußeren Mäheinheiten für die Transportfahrt um in Fahrtrichtung weisende Schwenkachsen in eine aufrechte Position klappen. Diese, von Hydraulikzylindern betätigte Schwenkvorrichtung besteht insgesamt aus je zwei voneinander unabhängigen Schenkvorrichtungen, wobei diese jeweils zwischen dem äußeren Gestellbalken der äußeren Mäheinheit und der mittleren Mäheinheit angebracht sind. Der Schwenkmechanismus besteht aus einem zwei Arme aufweisenden Doppelhebel, der in einem Gelenk am äußeren Ende des mittleren Gestellbalken gelagert ist und an dem die Kolbenstange des jeweiligen Hydraulikzylinders angeschlagen ist. Am unteren Ende des Doppelhebels befindet sich die den Arbeitswerkzeugen nahe liegende Gelenkverbindung, welche zugleich die äußere und die mittlere Mäheinheit miteinander verbindet. Dabei ist die äußere Mäheinheit mittels eines starr mit der äußeren Mäheinheit verbundenen Hebelarms mit diesem Gelenkpunkt verbunden. Am andere und oberen Ende des Doppelhebels ist in einem weiteren Gelenkpunkt eine Zugstange angeschlagen, die anderen Endes in einem Langloch des Gestellbalkens der äußeren Mäheinheit eingreift und mit diesem gelenkig verbunden ist. Somit stützen sich die äußeren Mäheinheiten in ihrer Transportstellung verklappt an dem jeweiligen Doppelhebel und dem Hydraulikzylinder ab. Dabei übernimmt die Zugstangenverbindung zwischen dem jeweils äußeren Mähwerk und dem zugehörigen Doppelhebel ausschließlich Zugkräfte auf. Nachteilig hierbei ist der erhebliche Bauaufwand mit zwei Schwenkeinrichtungen und drei Mäheinheiten und den dazugehörigen Antriebsorganen.

Aufgabe der Erfindung ist es, ein Mähwerk mit großer Arbeitsbreite und minimaler Anzahl klappbarer Mähaggregate derart zu gestalten, dass dabei einerseits die maximale Arbeitsbreite erreicht wird und wobei andererseits die einschränkenden Randbedingungen, wie die der zulässigen Transportbreite und Transporthöhe nicht überschritten werden.

Die erfinderische Aufgabenstellung wird gelöst mit den kennzeichnenden Merkmalen des Anspruches 1. Weitere vorteilhafte Ausgestaltungen der Erfindung sind der Beschreibung, den Unteransprüchen und den Figurendarstellungen zu entnehmen.

Dementsprechend zeichnet sich ein gattungsgemäßes Mähwerk mit mindestens zwei benachbarten Mähaggregaten durch eine Rahmen- bzw. Traggestellkonstruktion mit Doppelgelenken aus, dessen Gelenkachsen entweder in geringem Abstand in Fahrtrichtung parallel zueinander verlaufen, oder deren Gelenkachsen identisch sind, aber deren Gelenke in Fahrtrichtung hintereinander angeordnet sind. Diese Anordnung der Gelenke zueinander, nachfolgend als Doppelgelenk bezeichnet, befindet sich dabei in unmittelbarer Bodennähe etwa in der Höhe der Schnittebene der Mähklingen.

Jedem Mähaggregat ist dabei explizit ein eigenes Gelenk zugeordnet, so dass jedes Mähaggregat um seine ihm zugeordnete Gelenkachse der Bodenkontur folgend unabhängig von jeweils anderen Schwenkbewegungen quer zur Fahrtrichtung ausführen kann. Dabei sind beide Gelenke zumindest quer zur Fahrtrichtung etwa in der Längsmittelebene des Trägerfahrzeugs untereinander und fest miteinander verbunden, wohingegen sie sich beim Überführen in die Transportstellung voneinander lösen und dadurch einen wesentlich größeren Abstand zueinander einnehmen. Dennoch bleibt jedes Mähaggregat mit seinem ihm zugeordneten Gelenk verbunden. Dabei können die Gelenke sowohl als Scharnierverbindungen wie auch als Kugelgelenkverbindungen ausgestaltet sein.

Weiterhin ist jedem der beiden Gelenke ein Stützarm, dessen Längserstreckung im wesentlichen in vertikaler Richtung verläuft zugeordnet. In einer besonders vorteilhaften Ausgestaltung ist der Stützarm als Federbein mit einem Dämpfungselement ausgebildet. Dieses stellt eine elastische Kopplung zwischen den Mähaggregaten und dem Traggestell dar. Dabei geht es darum, etwa lotrecht zur Fahrbahnebene Stoßbelastungen aufzunehmen um dadurch die Stoßbelastungen zu reduzieren und welches dabei gleichzeitig die Anpassung der Mähaggregate an Bodenkonturen verbessert.

Des weiteren können die Doppelgelenke an den unteren Enden der Stützarme untereinander durch eine in der Betriebsstellung in Eingriff stehende Laschenverbindung derart gekoppelt sein, dass sie nur gemeinsam synchrone Vertikalbewegungen durchführen können. Dieses trägt dazu bei, das sich keine Längenunterschiede, was Länge der Stoppel im Überdeckungsbereich der Mähklingen der beiden inneren einander zugewandten Mähscheiben der benachbarten Mähaggregate betrifft, einstellen.

Diese erfinderische Ausgestaltung der Kopplung der Mähaggregate untereinander in Verbindung mit der Anbindung dieser durch Doppelgelenke an die Tragkonstruktion verleiht den Mähaggregaten einen zusätzlichen Freiheitsgrad in seinen Bewegungsmöglichkeiten, wenn es darum geht, Hindernisse zu überfahren. Bedingt durch die Federeigenschaften der Federbeine können dabei vertikale Beschleunigungskräfte reduziert und somit die Kraftamplituden der Beschleunigungskräfte geringer gehalten werden.

Ein weiterer Vorteil der elastischen Kopplung zwischen der Masse der Mähaggregate und der Masse des Traggestells bietet die Möglichkeit, das Traggestell gegenüber dem Trägerfahrzeug in einer starren Position zu halten ohne dass dabei der Bewegungsspielraum der Mähaggregate unnötig eingeengt wird.

Die starre Position des Traggestells gegenüber dem Trägerfahrzeug kann beispielsweise dadurch erreicht werden, dass die Kolben der Hydraulikzylinder des Hubwerks für die Kopplungsvorrichtung des Mähwerks an das Trägerfahrzeug hydraulisch durch entsprechende Sperrventile eingespannt sind.

Die zuvor angesprochene elastische Kopplung, die beispielsweise durch eine Federentlastung oder durch eine hydraulische Abfederung mittels Blasenspeicher herbeigeführt werden kann, in Verbindung mit der starren Anlenkung des Traggestells gegenüber dem Trägerfahrzeug beinhaltet somit den weiteren Vorteil, dass die Masse des Traggestells - und somit dessen Gewichtskraft - in jeder Position der Betriebsstellung vom Trägerfahrzeug getragen und somit nicht von dem Mähaggregat gegenüber dem Boden abgestützt wird. Dieses wirkt sich günstig hinsichtlich der Minimierung des Bodenauflagedrucks des Mähaggregats aus, welches die Grasnabe schont.

Die einzelnen Mähaggregate werden in der Arbeitsposition zur Entlastung der Doppelgelenke zusätzlich an längenveränderlichen Auslegern geführt. Diese sind beispielsweise als Teleskopausleger ausgebildet, welche schwenkbeweglich um Horizontalachsen mit dem Traggestell verbunden sind.

Diese Art der Anlenkung verhindert Zwangskräfte in den Doppelgelenken, welche durch Rollbewegungen des Traktors verursacht werden können, wobei diese Kräfte dann wiederum von den Mähaggregaten gegenüber dem Boden abgestützt werden.

Auch verbessert diese Ausgestaltung der Anlenkung der Ausleger an das Traggestell einerseits und an die Mähaggregate andererseits die Schwenkbeweglichkeit der Mähaggregate um die zugehörigen Gelenkachsen des Doppelgelenks, welches die Bodenanpassungseigenschaften wiederum verbessert.
Dabei sind die Stützarme selbst auch gelenkig an dem Tragrahmen angeschlossen, so dass diese ebenfalls schwenkbeweglich mit dem Tragrahmen verbunden sind. In der Arbeitstellung der Mähaggregate sind diese gegenüber dem Tragrahmen jedoch verriegelt. Zur Überführung in die Transportstellung und auch während der Transportfahrt selbst ist diese Verriegelung jedoch außer Funktion gesetzt. Dieses bedeutet, dass den Stützarmen in der Transportstellung eine gänzlich andere Funktion zufällt, als in der Arbeitsposition.

Dieses ermöglicht es, dass die Stützarme nunmehr in der Transportstellung und während der Überführung von der Arbeitsstellung in die Transportstellung und umgekehrt als Lenker im Sinne einer Lenkerkopplung fungieren.

Dieses bedeutet, dass die Stützarme Einfluss auf den Ablauf des Klappvorgangs nehmen, indem sie Teil der kinematischen Steuerung des klappbaren Schwenkvorgangs sind. Sie überführen dabei die Mähaggregate in eine besonders günstige Transportstellung. Dabei werden die Mähaggregate während der Transportfahrt durch einen zusätzlichen aber besonders kostengünstigen und die Transportsicherheit erhöhenden Nebeneffekt in einer sicheren und pendelfreien Lage ohne eine zusätzliche Verriegelung gehalten und geführt.

Die multifunktionale Ausgestaltung der Anlenkung der Mähaggregate an das Traggestell weist somit insbesondere folgende Vorteile auf:
a) gelenkige Anbindung der Mähaggregate in dem Doppelgelenk zur Bodenanpassung quer zur Fahrtrichtung
b) Lösbarkeit der Doppelgelenkverbindung untereinander ohne das die eigentliche Gelenkverbindung zwischen Mähwerk und Traggestell aufgelöst wird.
c) Lenkerfunktion der Stützarme zur Überführung der Mähaggregate in die Transportstellung
d) Verlagerung der Gelenkverbindung zwischen Stützarm und Mähaggregat während des Klappvorgangs in den äußeren Bereich des zusammengeklappten Mähwerks und dadurch günstige Transportlage
e) Verriegelungsfunktion der Mähaggregate in der Transportposition gegen Pendelbewegungen durch die Anlenkung der Stützarme
f) elastische Kopplung zwischen Mähaggregate und Traggestell durch die Ausbildung der Stützarme als Federbeine und dadurch verbesserte Bodenanpassung lotrecht zur Fahrbahnebene mit Dämpfungsfunktion
g) Absenkung der Transporthöhe durch Längenveränderung der Ausleger unter Ausnutzung der Schwerkraft
h) mittige im Schwerpunkt angreifende gelenkige Anbindung der Ausleger an einen das Mähaggregat überbauenden Portalrahmen zur Verbesserung der Bodenanpassung quer zur Fahrtrichtung
i) schwenkbeweglicher Anbindung der Mähaggregate an ihre Portalrahmen in Bodennähe und dadurch verbesserte Bodenanpassung der Mähaggregate in Fahrtrichtung

Die nachfolgende Beschreibung eines Ausführungsbeispiels verdeutlicht dieses:

### Bezugszeichenliste

- 1: Mähwerk
- 2,2': Mähaggregat
- 3: Mähkreisel
- 4,4': Getriebegehäuse
- 5,5': Portalrahmen
- 6: Traggestell
- 7,7': Ausleger
- 8,8': Gelenk
- 9,9': Schwenkachse
- 10,10': Gelenk
- 11,11': Schwenkachse
- 12,12': Stützarm
- 13,13': Gelenk
- 14,14': Schwenkachse
- 15,15': Gelenk
- 16,16': Schwenkachse
- 17,17': Innenteil
- 18,18': Außenteil
- 19,19': Verlängerungsteil
- 20,20': Widerlager
- 21: Dreipunkthydraulik
- 22,22': Rahmenfortsatz
- 23,23': Horizontalgelenk
- 24: Schwenkachse
- 25: Mittelebene
- 26: Trägerfahrzeug
- 27: Mähklinge
- 28: Kreiselachse
- 29,29': Hydraulikzylinder
- 30: Doppelgelenk
- 31: Abstand der Gelenke 8,8' in der Transportstellung
- 32: Anschlagbolzen
- 33: Langloch
- 34: äußerer Anschlag
- 35: innerer Anschlag
- 36: Innenrohr
- 37: Außenrohr
- 38: Verriegelungseinrichtung
- 39: Abstand der Gelenke 8,8' in der Arbeitsstellung
- 40: Dämpfungselement
- 41: Federelement
- 42: vorgespannte Druckfedern
- 43: Abstand der Gelenke 10,15 bzw. 10',15'
- 44: Abstand der Anschlagflächen 34,35
- 45: Mitnehmerlasche
- 46: Gelenkbolzen
- 47: Unterlegscheibe
- 48: Spannhülse
- 49: Zentrieransatz
- 50: Zentrieranschlag
- 51,51': Lagerbund
- 52: Zentrieranschlag
- 53: Zentrieröffnung
- 54: Abstand 13,14 bzw.13',14'
- 55: vertikale Verriegelung

- A: Arbeitsstellung
- T: Transportstellung
- F: Fahrtrichtung
- B: Transportbreite
- H: Transporthöhe

Es zeigen:
- Fig.1: ein Mähwerk in Arbeitsstellung in einer Ansicht entgegen der Fahrtrichtung
- Fig.2: ein Mähwerk in Arbeitsstellung in einer Seitenansicht in Fahrtrichtung
- Fig.3: ein Mähwerk in Arbeitsstellung in einer Transportstellung
- Fig.4: einen vergrößerten Ausschnitt der Mähwerksanlenkung an ein Traggestell in Arbeitsstellung
- Fig.4a: einen vergrößerten Ausschnitt der an die Mähaggregate bzw. der an das Traggestell angelenkten Stützarme gemäß Fig. 4
- Fig.4b: einen Längsschnitt als Teilschnitt durch die Stützarme gemäß Fig. 4a
- Fig.5: ein Mähwerk in Arbeitsstellung, angepasst an eine abfallende Bodenkontur
- Fig.6: Vergrößerung des Doppelgelenks gemäß Fig.1
- Fig.7: Schnitt B-B gemäß Fig.6
- Fig.8: Schnitt C-C gemäß Fig.7

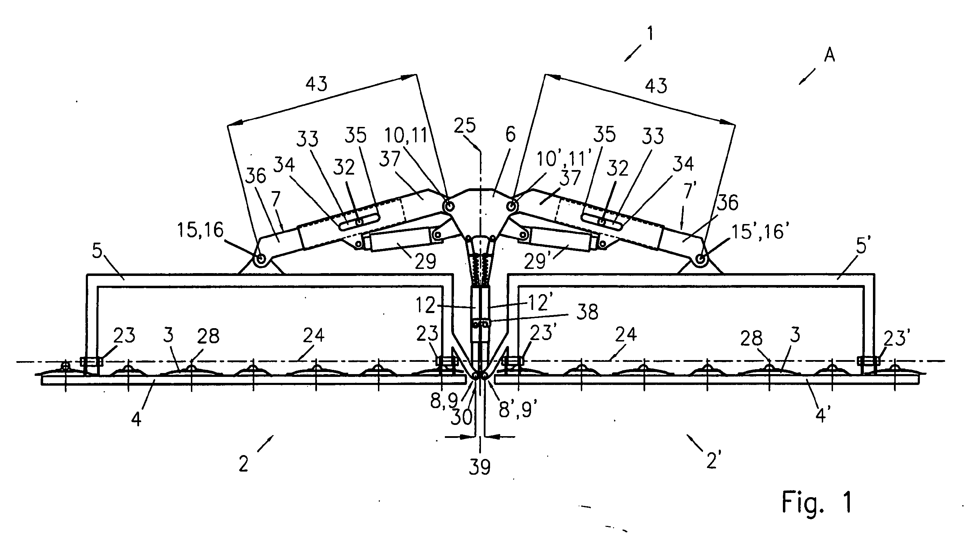

In Fig.1 ist ein Mähwerk 1 nach der Erfindung in Arbeitsstellung A in einer Ansicht entgegen der Fahrtrichtung F dargestellt.

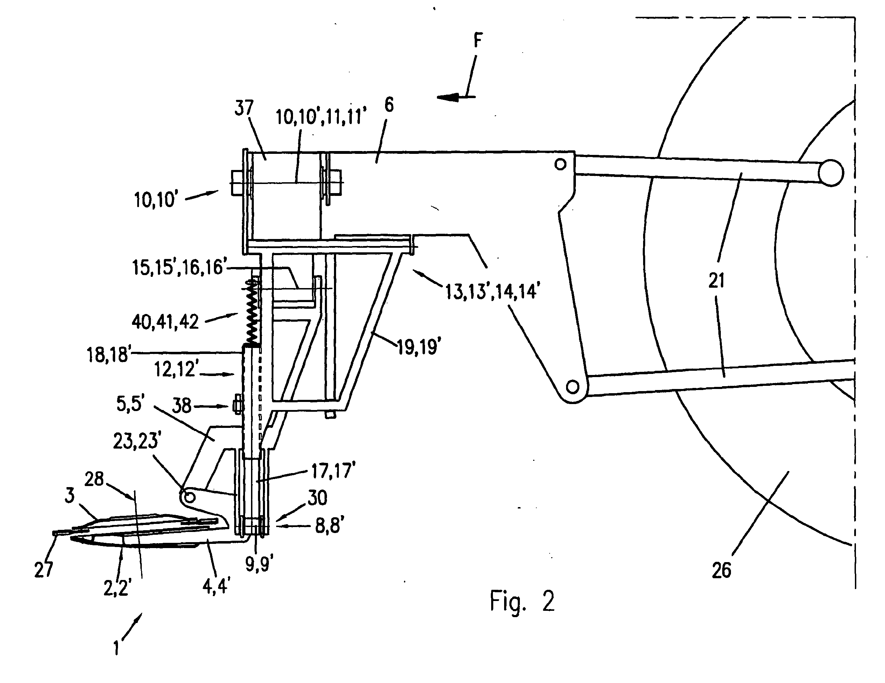

In Fig.2 ist das Mähwerk gemäß Fig.1 in einer Seitenansicht gekoppelt mit der Dreipunkthydraulik 21 eines Trägerfahrzeugs 26 in einer Seitenansicht dargestellt.

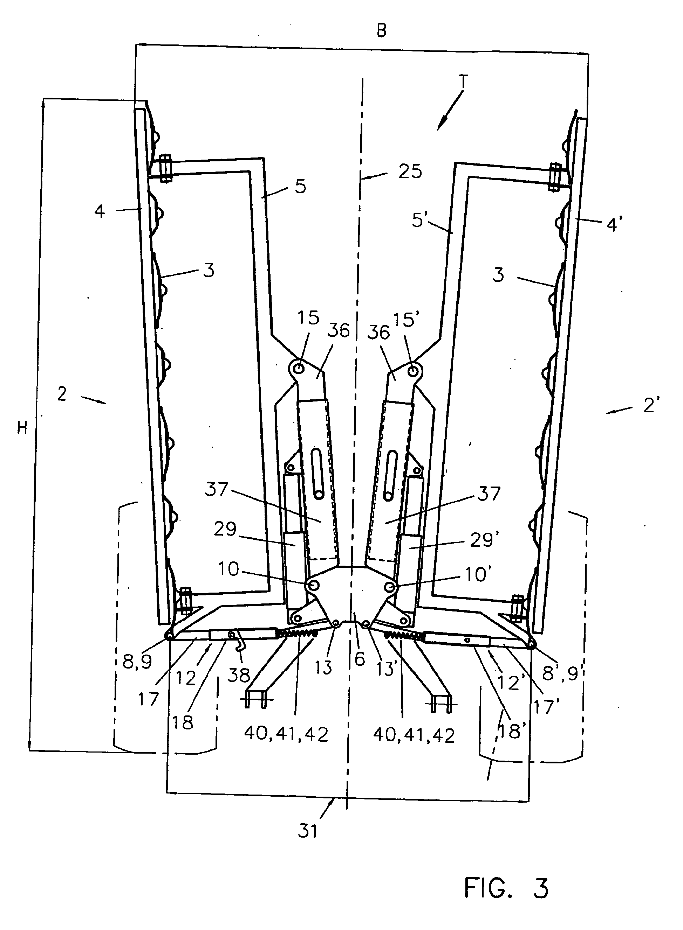

Fig.3 zeigt ein in den Transportzustand verklapptes Mähwerk nach der Erfindung.

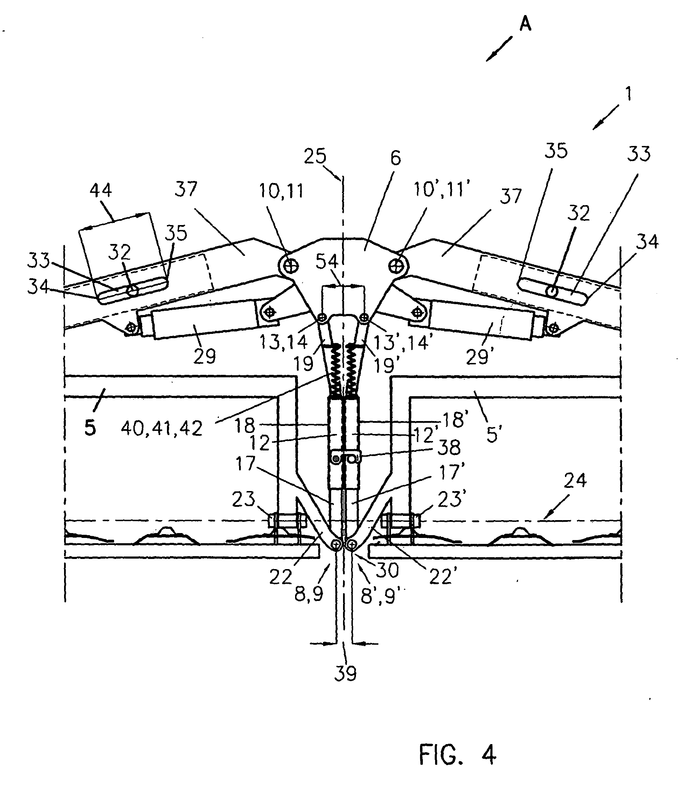

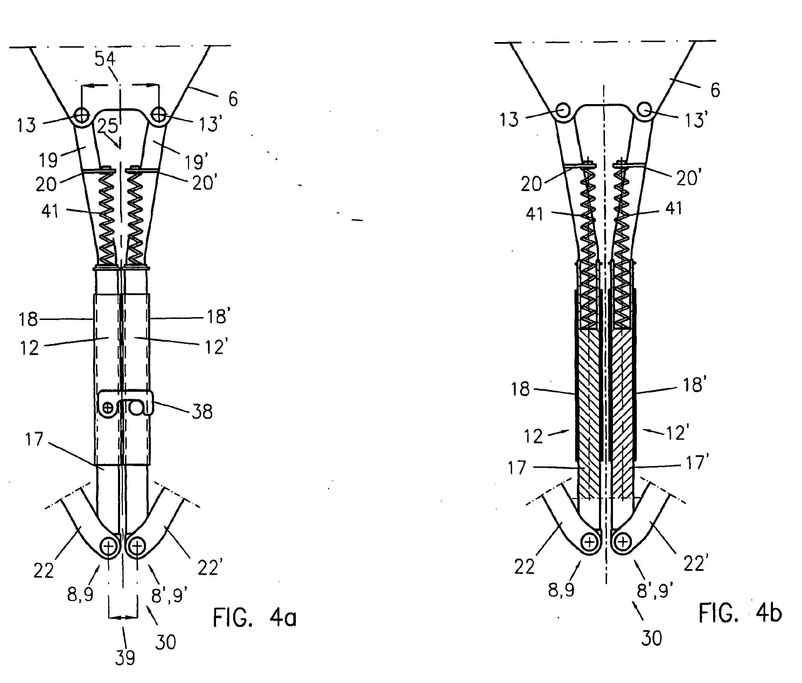

In Fig.4 wird ein vergrößerter Ausschnitt des Mittelteils des Mähwerks 1 gemäß Fig.1 und insbesondere die Mähwerksanlenkung an das Traggestell in der Arbeitsstellung dargestellt.

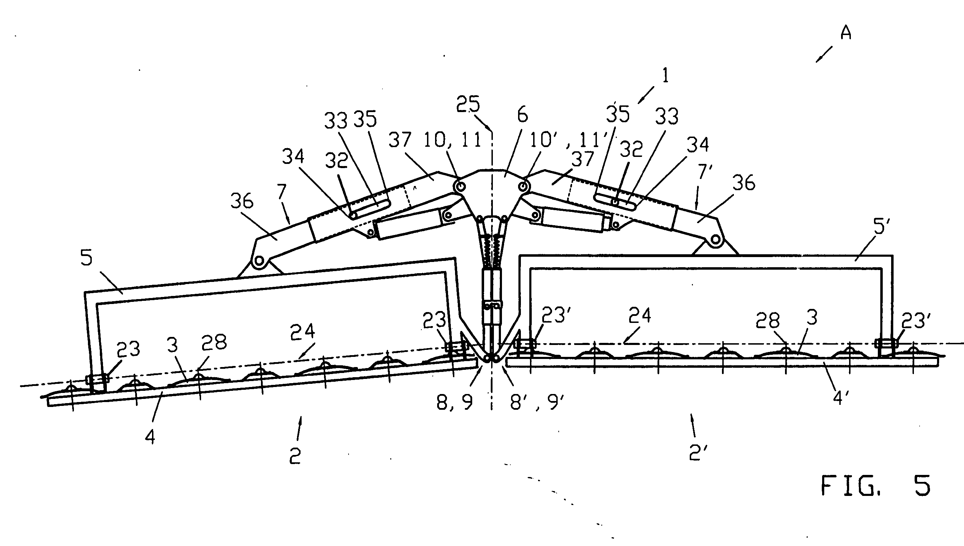

In Fig.5 ist die Schwenkbeweglichkeit und damit die Bodenanpassungsfähigkeit eines Mähaggregats bei abfallendem Gelände quer zur Fahrtrichtung, dargestellt.

Das dargestellte Mähwerk 1 zeigt ein Scheibenmähwerk mit zwei ausgeklappten Mähaggregaten 2,2'. In Fig.1 sind die beiden Mähaggregate 2,2' parallel und horizontal zum Boden ausgerichtet, in Fig.5 hingegen ist das Mähwerk 1 der abfallenden Bodenkontur folgend mit abgewinkeltem Mähaggregat 2 dargestellt.

Die in bekannter Weise um etwa lotrechte Kreiselachsen 28 angetriebenen und mit Mähklingen 27 bestückten Mähkreisel 3 sind in Getriebegehäusen 4,4' gelagert. Die Getriebegehäuse 4,4' der Mähaggregate 2,2' sind von Portalrahmen 5,5' überbaut, wobei die Portalrahmen 5,5' einerseits in den Horizontalgelenken 23,23' schwenkbar um die Schwenkachse 24 mit den Getriebegehäusen 4,4' und andererseits beide Mähaggregate 2,2' mittels der an den Rahmenfortsatzenden 22,22' des Portalrahmens 5,5' befindlichen Gelenken 8,8' um die etwa fahrtrichtungsparallelen Schwenkachsen 9,9' untereinander verbunden sind.

Weiterhin sind beide Mähaggregate 2,2' mittels Auslegern 7,7' mit dem Traggestell 6 in den Gelenken 10,10' bzw. 15,15' und deren fahrtrichtungsparallelen Schwenkachsen 11,11' bzw. 16,16' verbunden.

Das Traggestell 6 ist beispielsweise mit der Dreipunkthydraulik 21 eines Traktors gekoppelt, so dass das Mähwerk 1 von dessen Zapfwelle angetrieben werden kann.

In Fig.3 ist ein hochgeklapptes Mähwerk in Transportstellung mit der Transportbreite B dargestellt. Zu Beginn des Klappungsvorgang werden die Gelenke 8,8' aufgrund der erfinderischen Ausgestaltung des Mähwerks 1 durch die Entriegelung der Verriegelungseinrichtung 38 voneinander gelöst und im weiteren Verlauf des Klappvorgangs bewegen sich die Gelenke 8,8' von der vertikalen Mittelebene 25 des Mähwerks 1 in den Außenbereich des zusammengeklappten Mähwerks 1 hinein. Dabei nehmen die Mähaggregate 2,2' eine überwiegend vertikale Ausrichtung gegenüber der Aufstandsfläche des Trägerfahrzeugs 26 ein und die Längsverschiebbarkeit der als teleskopartig ausgelegten Ausleger bewirkt ein zusätzliches Absenken der Mähaggregate 2,2' relativ zur Aufstandsfläche des Trägerfahrzeugs, welches die Transporthöhe H reduziert.

Der Aufbau des Mähwerks gestaltet sich symmetrisch zur Mittelebene 25 des Mähwerks 1, welche in etwa auch die Mittelebene des Trägerfahrzeugs 26 ist. Mittig zwischen den beiden Mähaggregaten 2,2' ist das Traggestell 6 angeordnet, an dem die Stützarme 12,12' in den Gelenken 13,13' im Abstand 54 zueinander angelenkt sind. An freien Ende der Stützarme 12,12' befinden sich die Gelenke 8,8'. Die Gelenke 8,8' verbinden die Portalrahmen 5,5' unterhalb der Schwenkachse 24, wodurch die Mähaggregate 2,2' unter- und miteinander verbunden sind.

Die Stützarme 12,12' sind so ausgebildet, dass sie aus einem prismenförmigen Innenteil 17,17' bestehen, welche in der Arbeitsstellung A des Mähwerks 1 etwa lotrecht zum Boden ausgerichtet sind. Dabei befinden sich die Gelenke 8,8' endseitig an den dem Boden zugewandten Innenteilen 17,17'. Beide Gelenke 8,8' bilden funktional ein Doppelgelenk 30 miteinander, wobei an jedem Gelenk 8 bzw. 8' ein Mähaggregat 2 bzw. 2' schwenkbeweglich um ihre fahrtrichtungsparallelen Horizontalachsen 9,9' angelenkt ist.

Die prismenförmigen Innenteile 17,17' sind dabei in einem Außenteil 18,18', welche als Umfassungsführung ausgebildet sind, vertikal verschiebbar geführt. Die Außenteile 18,18' sind dabei mit Verlängerungsteilen 19,19' so ausgestattet, dass diese an ihren oberen Enden in dem Gelenk 13,13' mit dem Traggestell 6 um fahrtrichtungsparallele Achsen 14,14' schwenkbar gelagert mit dem Traggestell 6 verbunden sind.

Die Stützarme 12,12' sind in dem dargestellten Ausführungsbeispiel gleichzeitig mit einer Federentlastung und mit diesen gleichzeitig als Dämpfungselemente 40 ausgebildet, wobei diese aufgrund von Vertikalkräften, die auf die Stützarme 12,12' einwirken, Längenänderungen der Stützarme 12,12' zulassen. Eine derartige Ausgestaltung der Stützarme 12,12' kommt der Funktion eines Federbeins gleich. Die Federelemente können dabei beispielsweise auch als Gasdruckfedern und/oder dabei in Verbindung mit Stoßdämpfern ausgebildet sein. Gleichermaßen können die Stützarme auch als Hydraulikzylinder ausgebildet sein, wobei die prismenförmigen Innteileile 17,17' dann als Kolbenstangen und die Zylindergehäuse als Außenteile 18,18' und damit als Umfassungsführungen ausgebildet sein können. Dabei können die Kolbenstangen in an sich bekannter Weise hydrostatisch mittels Hydrospeicher eingespannt sein, wodurch die elastische Kopplung und Bedämpfung beispielsweise durch Hydrospeicher, ausgeführt als pneumatisch vorgespannte Blasenspeicher, realisiert sein kann.

In dem dargestellten Ausführungsbeispiel sind die Innenteile 17,17' der Stützarme 12,12' über vorgespannte Druckfedern 42 gegenüber dem Traggestell 6 in den Widerlagern 20,20' abgestützt. Dabei erfolgt die Abstützung indirekt über die Gelenke 13,13', da die Widerlagern 20,20' fester Bestandteil der Verlängerungsteile 19,19' und somit auch fester Bestandteil der Außenteile 18,18' sind.

Beide Stützarme 12,12' sind in der Arbeitsposition A durch die Verriegelungseinheiten 38 untereinander verbunden, so dass die Schwenkbeweglichkeit der Stützarme 12, 12' um die Gelenke 13, 13' unterbunden ist. Dadurch bedingt ist der Abstand 39 der Gelenke 8, 8' zueinander nahezu konstant, so dass in diesem Zustand beide Gelenke 8,8', funktional miteinander gekoppelt, ein Doppelgelenk 30 bilden.

Die Ausleger 7,7' sind in den Gelenken 8,8' des Portalrahmens 5,5' etwa mittig in dessen Schwerpunkt angeschlagen, wobei die Ausleger 7,7' mit ihrem anderen Ende in den Gelenken 10,10' mit dem Traggestell 6 verbunden sind. Dabei sind die Gelenkachsen der Gelenke 8,8',10,10' als überwiegend fahrtrichtungsparallele Klappachsen ausgerichtet. Als Stellantriebe zum Verklappen der Mähaggregate 2,2' in ihre Transportstellung dienen die Hydraulikzylinder 29,29'.

Die Ausleger 7,7' sind als Teleskopausleger gestaltet. Dieses ermöglicht eine Längenveränderung der Ausleger während des Betriebes. Diese Längenänderung wird durch die äußeren und inneren Anschlagflächen 34, 35 der Langlöcher 33 begrenzt, in denen die mit den Innenrohren 36 der Ausleger 7, 7' verbundenen Anschlagbolzen 32 geführt werden.

Diese Langlochführung ermöglicht somit eine Bodenanpassung quer zur Fahrtrichtung F und trägt zur Verringerung der Schäden beim Überfahren von Hindernisse bei.

Die Längenveränderbarkeit der Ausleger 7,7' dient zusätzlich der verzwängungsfreien Führung der Mähaggregate 2,2' hinsichtlich der Gelenke 8,8' in bezug auf Horizontalkräfte quer zur Fahrtrichtung.

Beim Verschwenken der Ausleger 7, 7' in die Transportstellung T ist die Verriegelungseinrichtung 38 zu entriegeln, und anschließend werden die Hydraulikzylinder 29, 29' druckbeaufschlagt, so dass die Ausleger 7,7' in den Gelenken 10, 10' um die Schwenkachsen 11,11' verschwenkt werden können.

Des weiteren werden die Ausleger 7,7' in ihren Transportzustand infolge der Gravitationskraft auf Block ineinander gefahren, so dass dadurch die Transporthöhe des Mähwerks 1 reduziert wird. Dieses konstruktive Merkmal trägt einerseits im Transportzustand zur Minimierung der Transporthöhe und andererseits in der Arbeitsstellung zur Maximierung der Arbeitsbreite bei. In besonders vorteilhafter Weise können die Hydraulikzylinder 29,29' als kostengünstige Plungerzylinder ausgeführt sein.

Überführt werden die Mähaggregate 2,2' von ihrer Arbeitsposition A in ihre Transportposition T, indem die Ausleger 7,7' um ihre dem Traggestell 6 zugewandten Schwenkachsen 11,11' verschwenkt, d.h. hochgeklappt werden.

Dabei sind die Mähaggregate 2,2' durch die Stützarme 12,12' als Kopplungselemente mit dem Portalrahmen 5,5' als Bestandteil der Rahmenkonstruktion kinematisch so geführt, dass diese nicht nur an die Verschwenkbewegung der Ausleger 7,7' selbst gebunden sind, sondern auch so, dass die Stützarme 12,12' nunmehr die Funktion der Lenkerkopplung gegenüber den Mähaggregaten übernehmen. Dadurch erfahren die Mähaggregat, 12,12' während des Hochklappens in die Transportstellung eine zusätzliche Drehung um ihre jeweilige Schwenkachse 16,16' in dem jeweiligen Gelenk 15,15'.

Dabei werden die Mähaggregate 2,2' während des Verklappens in die Transportposition T gleichzeitig in eine optimale Lage hinsichtlich der Transportbreite überführt. Dabei verhindern die stützarme 12,12' durch ihre Anlenkung in der Transportstellung bzw. während der Transportfahrt gleichzeitig ein Pendeln der Mähaggregate 2,2' um die Schwenkachsen 16,16' der Gelenke 15,15', so dass die Stützarme 12,12' gleichermaßen eine Transportverriegelung für die Mähaggregate darstellen.

Die Verriegelungseinrichtung 38 kann manuell aber auch durch Stellmittel, beispielsweise durch einen aus Gründen der Übersichtlichkeit nicht dargestellten Hydraulikzylinder betätigbar, verwirklicht sein.

Beispielsweise kann eine Verriegelungseinrichtung 38 auch durch Überbrückung der Gelenke 13,13' gegenüber dem Traggestell 6 auch durch nicht näher dargestellte, aber in üblicher Weise bekannte Hydraulikzylinder realisiert werden.

Die Gelenke 8,8' können in an sich bekannter Weise als Scharniergelenke oder auch als an sich bekannte Kugelgelenke ausgeführt sein.

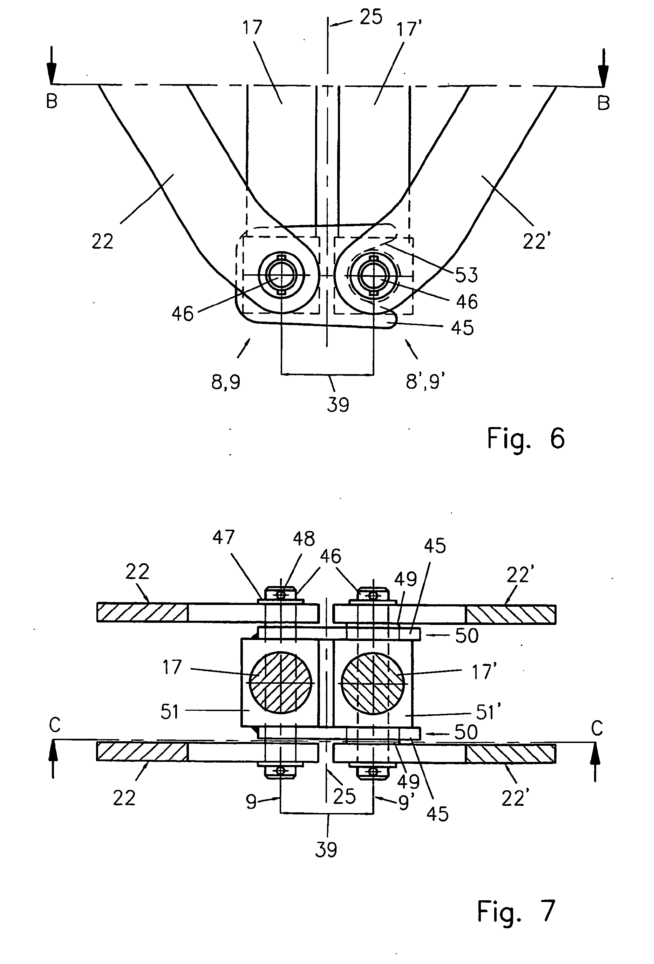

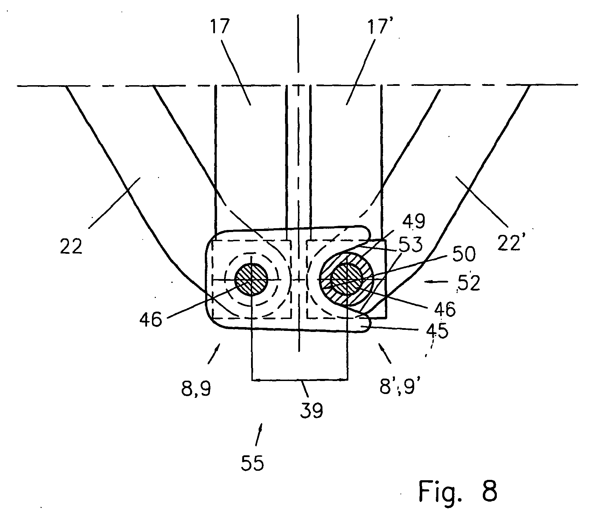

Ein Ausführungsbeispiel eines Doppelgelenks nach der Erfindung, bestehend aus den Gelenken 8 und 8', ist in den Fig.6 bis 8 näher dargestellt. Fig.6 zeigt einen Ausschnitt des Doppelgelenks gemäß Fig.1 in vergrößerter Darstellung. Fig. 7 zeigt den Schnitt B-B gemäß Fig.6 und Fig. 8 zeigt den Schnitt C-C gemäß Fig.7. Die Gelenke 8,8' befinden sich an den unteren Enden der Innenteile 17,17' der Stützarme 12,12', wobei der jeweilige Lagerbund 51,51' der Gelenke 8,8' mit dem jeweiligen Innenteil 17,17' verschweißt ist.

Der in der Schwenkachse 9,9' liegende Gelenkbolzen 46 durchdringt sowohl den Lagerbund 51,51' als auch die Rahmenfortsätze 22,22' und bildet mit diesem gemeinsam das Gelenk 8 bzw. 8'. Der Gelenkbolzen 46 ist in seiner Lage durch Unterlegscheiben 47 und Spannhülsen 48 axial fixiert. Mit dem Lagerbund 51 ist beidseitig ein Zentrieranschlag 50 verschweißt. Der Zentrieranschlag 50 weist dabei eine Zentrieröffnung 53 auf, die dem benachbarten Gelenk 8' zugewandt ist. Der Lagerbund 51' weist beidseitig einen Zentrieransatz 49 auf, der sich in der Arbeitsstellung an der Anschlagfläche als Zentrieranschlag 50 abstützt. Dadurch wird der Abstand 39 der Gelenke 8,8' zueinander in Verbindung mit der Verriegelungseinrichtung 38 festgelegt und arretiert.

Diese Ausgestaltung des Lagerbunds 51,51' in Verbindung mit der Mitnehmerlasche 45 stellt die vertikale Verbindung und damit eine vertikale Verriegelung 55 der beiden Gelenke 8,8' bzw. die vertikale Verbindung der Innenteile 17,17' untereinander dar.

Somit stellen die Gelenke 8,8' in Verbindung mit der horizontalen Verriegelungseinrichtung 38 und der vertikalen Verriegelung 55, ausgebildet als Mitnehmerlasche 45, ein Doppelgelenk als bauliche und funktionale Einheit dar.

Diese Verriegelungen (38,55) müssen aber zur Überführung des Mähwerks wieder gelöst werden, da es ansonsten nicht möglich ist, das Mähwerk in die erfindungsgemäße günstige Transportstellung zu verklappen, in Folge dessen der Abstand 39 der Gelenke 8,8' sich im Transportzustand erheblich gegenüber der Arbeitsstellung vergrößern kann.

Dabei bleiben die eigentlichen Gelenkverbindungen der Gelenke 8 und 8' funktional erhalten und sie nehmen dabei eine bedeutsame und erfinderische Funktion hinsichtlich der Lenkerkopplung zur Steuerung des Verschwenkungsvorgangs der Mähaggregate 2,2' um die jeweiligen Schwenkachsen 16,16' der Gelenke 15,15' zur Überführung des Mähwerks 1 in eine besonders günstige Transportposition wahr.

Des weiteren können die Gelenke 8,8' sowohl in Fahrtrichtung F nebeneinander als auch in hier nicht näher dargestellter Weise in Fahrtrichtung F hintereinander angeordnet sein. In diesem Fall würde der Abstand 39 der Gelenke in der Arbeitsstellung identisch zu Null verschwinden, d.h. die Schwenkachsen liegen in ein und derselben Achse.

Analog gilt dieses auch für die Stützarme 12,12', die grundsätzlich auch in Fahrtrichtung hintereinander angeordnet sein können und wobei dann auch die Gelenke 13,13' hintereinander angeordnet sein können. Im letzteren Fall würde dann auch gelten, dass die Schwenkachsen 14,14' hintereinander liegen und der Abstand 39 der Gelenke 13,13' identisch zu Null verschwindet, d.h. die Schwenkachsen liegen in ein und derselben Achse.

In jedem Fall bleibt auch die Gelenkverbindung 8 mit der Stütze 12 und die Gelenkverbindung 8' mit der Stütze 12' und damit die mechanische Verbindung zwischen den jeweiligen Mähaggregaten 2,2' und den Stützarmen 12,12' in der Transportstellung T erhalten, d.h. diese übernimmt dabei eine wichtige Verriegelungsfunktion in bezug auf eine stabile und damit verkehrssichere Lage der Mähaggregate während der Transportfahrt.

Zu einer weiteren Verbesserung der Bodenanpassung der Mähaggregate 2,2' in Bezug auf die Fahrrichtung trägt die gelenkige Verbindung der Mähaggregat 2,2' mit den Portalrahmen 5 bzw. 5' bei, indem durch die Schwenkbeweglichkeit der Mähaggregate 2,2' um die Gelenkachse 24 das Überfahren von Kuppen und Erhöhungen, oder das Durchfahren von Senken im Gelände, durch mögliches Ausweichen und Anpassen der Mähaggregate an die Bodenkontur verbessert wird. Je nach Ausführung des Doppelgelenks 8,8' liegt der Abstand der Gelenke 8,8' vorzugsweise in einem Maßintervall zwischen etwa 0 bis 150 mm.

Durch die bodennahe Anlenkung der Mähaggregate 2,2' in den Gelenken 8,8' an das Traggestell 6 ist weiterhin gewährleistet, dass sich die Mähklingen 27 der benachbarten Mähwerke 2,2' im Bereich der Mitteleben 25 und damit in ihrem Überdeckungsbereich nicht gegenseitig berühren.

Gleichzeitig stellt die Erfindung somit ein Verfahren dar, ein Mähwerk nach der Erfindung von seiner maximalen Arbeitstellung in eine besonders günstige Transportstellung und umgekehrt zu überführen.

## Patentansprüche

1. Mähwerk zum Anbau an ein Trägerfahrzeug (26), mit um überwiegend vertikale Kreiselachse (28) umlaufend angetriebenen mit Mähklingen (27) besetzten Mähkreiseln (3), mit wenigstens zwei an schwenkbeweglichen Armen geführten, quer zur Fahrtrichtung nebeneinander angeordneten Mähaggregaten (2, 2'), welche von Klappgelenken (10, 10') eines Traggestells (6) mit um etwa in Fahrtrichtung weisende Schwenkachsen (11, 11') aufgenommen werden und welche mittels einer kraftbetriebenen hydraulischen Schwenkvorrichtung (29, 29') von einer Arbeits- in eine Transportstellung und umgekehrt klappbar sind, **dadurch gekennzeichnet, dass** die Arme als längenveränderbare Teleskopausleger (7,7') ausgestaltet sind, wobei das Innenrohr (36) verschiebbar innerhalb eines Außenrohrs (37) geführt ist, und das Außenrohr (37) schwenkbeweglich um die Schwenkachsen (11,11') der Gelenkverbindungen (10,10') vom Traggestell (6), und das Innenrohr (37) schwenkbeweglich um die Schwenkachsen (16,16') der Gelenkverbindungen (15,15') von dem jeweiligen Mähaggregat (2,2') aufgenommen werden, und wobei die Mähaggregate (2,2') zugleich schwenkbeweglich um eine Schwenkachse (9 und/oder 9') eines bodennahen Gelenks (8,8') am Ende von Stützarmen (12,12') gelagert sind, und die Stützarme (12,12') am jeweils anderen Ende ebenfalls schwenkbeweglich in Gelenkverbindungen (13,13') vom Traggestell (6) aufgenommen werden, wobei die Schwenkbeweglichkeit der Stützarme (12,12') in ihrer Arbeitsstellung (A) um die Schwenkachsen (14,14') der Gelenkverbindungen (13,13') mittels einer Verriegelungseinrichtung (38) feststellbar ist und die Verriegelungseinrichtung (38) zur Freigabe der Schwenkbeweglichkeit der Stützarme (12,12') zur Verklappung der Mähaggregate (2,2') in ihre Transportstellung (T) entriegelbar ist, so dass die entriegelten Stützarme (12,12') durch ihre Schwenkbeweglichkeit die Funktion einer Lenkerkopplung gegenüber den Mähaggregaten (2,2') ausüben und die Mähaggregate (2,2') **dadurch** während des Hochklappens in ihre Transportstellung (T) eine Transportbreite (B) mindernde Drehung um ihre jeweilige Schwenkachse (16,16') ihres Gelenks (15,15') erfahren, und wobei die Mähaggregate (2,2') infolge der Schwerkraft und der Längenveränderbarkeit ihres Teleskopauslegers (7,7') eine Transportstellung (T) einnehmen, die eine weitere Reduzierung der Transporthöhe ermöglicht.

2. Mähwerk nach Anspruch 1, **dadurch gekennzeichnet, dass** die Gelenke (8,8') in der Arbeitsstellung (A) etwa in der Mittelebene (25) des Trägerfahrzeugs (26) und etwa in der Mittelebene (25) zweier benachbarter Mähaggregate (2,2') bodennah etwa in der Schnittebene der Mähklingen angeordnet sind.

3. Mähwerk nach Anspruch 1 , **dadurch gekennzeichnet, dass** die Mähaggregate (2,2') von einem Portalrahmen (5,5') überbaut und die Gelenke (15,15') etwa mittig und im Schwerpunkt des Portalrahmens (5,5') angelenkt sind.

4. Mähwerk nach Anspruch 1, **dadurch gekennzeichnet, dass** ein Ausleger (7,7') zur Begrenzung des Schiebewegs bezüglich der freien Beweglichkeit zwischen Innenrohr (36) und Außenrohr (37) eine Anschlagbegrenzung in Form eines äußeren Anschlags (34) und eines inneren Anschlags (35) aufweißt.

5. Mähwerk nach Anspruch 1 bis 4, **dadurch gekennzeichnet, dass** die Mähaggregate (2,2') des Mähwerks (1) mittels Hydraulikzylinder (29,29') ausgebildet als Plungerzylinder von einer Arbeitsstellung (A) in eine Transportstellung (T) verklappbar sind.

6. Mähwerk nach Anspruch 1 bis 5, **dadurch gekennzeichnet, dass** die Stützarme (12,12') parallel zur Fahrtrichtung (F) nebeneinander angeordnet sind.

7. Mähwerk nach Anspruch 1 bis 5, **dadurch gekennzeichnet, dass** die Stützarme (12,12') relativ zur Fahrtrichtung (F) hintereinander angeordnet sind.

8. Mähwerk nach Anspruch 5, **dadurch gekennzeichnet, dass** die Gelenke (13,13') relativ zur Fahrtrichtung (F) im Abstand (39) nebeneinander angeordnet sind.

9. Mähwerk nach Anspruch 6, **dadurch gekennzeichnet, dass** die Gelenke (13,13') relativ zur Fahrtrichtung (F) versetzt hintereinander angeordnet sind.

10. Mähwerk nach Anspruch 9, **dadurch gekennzeichnet, dass** die Schwenkachsen (14,14') der Gelenke (13,13') hintereinanderliegend identisch sind.

11. Mähwerk nach Anspruch 8, **dadurch gekennzeichnet, dass** der Abstand (39) der Gelenke (8,8') in einem Maßintervall von etwa 0 mm bis 150 mm liegen.

12. Mähwerk nach einem oder mehreren der vorhergehenden Ansprüche, **dadurch gekennzeichnet, dass** die Gelenke (8,8') in der Arbeitsstellung (A) in bezug auf ihre momentane Höhenlage zueinander durch einer Verriegelung (55) festgelegt sind.

13. Mähwerk nach einem oder mehreren der vorhergehenden Ansprüche, **dadurch gekennzeichnet, dass** die Mähaggregate (2,2') in ihrer Transportstellung (T) in bezug auf die Gelenke (15,15') hinsichtlich ihrer Schwenkbeweglichkeit durch die Stützarme (12,12') in ihrer Lage fixiert sind.

14. Mähwerk nach einem oder mehreren der vorhergehenden Ansprüche, **dadurch gekennzeichnet, dass** die Stützarme (12,12') vorgespannte Dämpfungselemente (40) aufweisen.

15. Mähwerk nach Anspruch 14, **dadurch gekennzeichnet, dass** die Dämpfungselemente (40) als Federelemente (41) ausgebildet sind.

16. Mähwerk nach Anspruch 15, **dadurch gekennzeichnet, dass** das Dämpfungselement (40) als vorgespannte Druckfeder (42) ausgebildet ist.

17. Mähwerk nach einem oder mehreren der vorhergehenden Ansprüche, **dadurch gekennzeichnet, dass** die Stützbeine als Hydraulikzylinder ausgebildet sind.

18. Mähwerk nach Anspruch 14, **dadurch gekennzeichnet, dass** die Dämpfungselemente (40) als vorgespannte hydropneumatische Gasdruckfedern vorzugsweise als vorgespannte Blasenspeicher ausgebildet sind.

19. Mähwerk nach Anspruch 14, **dadurch gekennzeichnet, dass** das Dämpfungselement (40) als vorgespannte Gasdruckfeder in Verbindung mit einem Stoßdämpfer ausgebildet ist.

20. Mähwerk nach einem oder mehreren der vorhergehenden Ansprüche, **dadurch gekennzeichnet, dass** das Mähaggregat (2,2') bodennah schwenkbeweglich um die Schwenkachse (24) mit dem Portalrahmen (5,5') verbunden ist.

## Claims

1. A mowing mechanism for mounting to a carrier vehicle (26) comprising mowing rotors (3) which are driven in rotation about predominantly vertical rotor axes (28) and which are fitted with mowing blades (27), at least two mowing assemblies (2, 2') which are guided on pivotably movable arms and which are arranged in mutually juxtaposed relationship transversely with respect to the direction of travel and which are carried by pivot joints (10, 10') of a carrier frame (6) with pivot axes (11, 11') facing approximately in the direction of travel and which can be pivoted from a working position into a transport position and vice-versa by means of a power-operated hydraulic pivoting device (29, 29'), **characterised in that** the arms are in the form of variable-length telescopic extension arms (7, 7'), wherein the inner tube (36) is guided displaceably within an outer tube (37) and the outer tube (37) is carried pivotably movably about the pivot axes (11, 11') of the pivot connections (10, 10') of the carrier frame (6) and the inner tube (37) is carried pivotably movably about the pivot axes (16, 16') of the pivot connections (15, 15') by the respective mowing assembly (2, 2'), and wherein the mowing assemblies (2, 2') are supported at the same time pivotably movably about a pivot axis (9 and/ 9') of a joint (8, 8') near the ground at the end of support arms (12, 12') and the support arms (12, 12') at the respective other end are also carried pivotably movably in pivot connections (13, 13') by the carrier frame (6), wherein the pivotal mobility of the support arms (12, 12') in their working position about the pivot axes (14, 14') of the pivot connections (13, 13') is fixable by means of a locking device (38) and the locking device (38) is unlockable for enabling the pivotal mobility of the support arms (12, 12') for pivotal movement of the mowing assemblies (2, 2') into their transport position (T) so that the unlocked support arms (12, 12') by virtue of their pivotal mobility perform the function of a link coupling with respect to the mowing assemblies (2, 2') and thereby during the upward pivotal movement into the mowing assembly transport position (T) the mowing assemblies (2, 2') experience a rotation reducing the transport width (B) about their respective pivot axis (16, 16') of their pivot connection (15, 15'), and wherein as a consequence of the force of gravity and the variability in respect of length of their telescopic extension arm (7, 7') the mowing assemblies (2, 2') assume a transport position which permits a further reduction in the transport height.

2. A mowing mechanism according to claim 1 **characterised in that** the joints (8, 8') in the working position (A) are arranged approximately in the central plane (25) of the carrier vehicle (26) and approximately in the central plane (25) of two adjacent mowing assemblies (2, 2') near the ground approximately in the cutting plane of the mowing blades.

3. A mowing mechanism according to claim 1 **characterised in that** the mowing assemblies (2, 2') have a portal frame (5, 5') provided thereover and the joints (15, 15') are pivoted approximately centrally and at the centre of gravity of the portal frame (5, 5').

4. A mowing mechanism according to claim 1 **characterised in that** an extension arm (7, 7') for limiting the displacement travel with respect to free mobility between the inner tube (36) and the outer tube (37) has an abutment limiting means in the form of an outer abutment (34) and an inner abutment (35).

5. A mowing mechanism according to claims 1 to 4 **characterised in that** the mowing assemblies (2, 2') of the mowing mechanism (1) are pivotable by means of hydraulic cylinders (29, 29') in the form of plunger cylinders from a working position (A) into a transport position (T).

6. A mowing mechanism according to claims 1 to 5 **characterised in that** the support arms (12, 12') are arranged in juxtaposed relationship parallel to the direction of travel (F).

7. A mowing mechanism according to claims 1 to 5 **characterised in that** the support arms (12, 12') are arranged one behind the other relative to the direction of travel (F).

8. A mowing mechanism according to claim 5 **characterised in that** the joints (13, 13') are arranged in juxtaposed relationship at the spacing (39) relative to the direction of travel (F).

9. A mowing mechanism according to claim 6 **characterised in that** the joints (13, 13') are arranged in displaced relationship one behind the other relative to the direction of travel (F).

10. A mowing mechanism according to claim 9 **characterised in that** the pivot axes (14, 14') of the joints (13, 13') are identical one behind the other.

11. A mowing mechanism according to claim 8 **characterised in that** the spacing (39) of the joints (8, 8') is in a dimension range of from about 0 mm to 150 mm.

12. A mowing mechanism according to one or more of the preceding claims **characterised in that** the joints (8, 8') are fixed in the working position (A) in relation to their instantaneous height position relative to each other by a locking means (55).

13. A mowing mechanism according to one or more of the preceding claims **characterised in that** the mowing assemblies (2, 2') are fixed in their position in their transport position (T) in relation to the joints (15, 15') in respect of their pivotal mobility by the support arms (12, 12').

14. A mowing mechanism according to one or more of the preceding claims **characterised in that** the support arms (12, 12') have prestressed damping elements (40).

15. A mowing mechanism according to claim 14 **characterised in that** the damping elements (40) are in the form of spring elements (41).

16. A mowing mechanism according to claim 15 **characterised in that** the damping element (40) is in the form of a prestressed compression spring (42).

17. A mowing mechanism according to one or more of the preceding claims **characterised in that** the support arms are in the form of hydraulic cylinders.

18. A mowing mechanism according to claim 14 **characterised in that** the damping elements (40) are in the form of prestressed hydropneumatic gas compression springs, preferably in the form of prestressed hydropneumatic storage units.

19. A mowing mechanism according to claim 14 **characterised in that** the damping element (40) is in the form of a prestressed gas compression spring in conjunction with a shock absorber.

20. A mowing mechanism according to one or more of the preceding claims **characterised in that** the mowing assembly (2, 2') is connected to the portal frame (5, 5') near the ground pivotably movably about the pivot axis (24).

## Revendications

1. Mécanisme de fauchage à monter sur un véhicule porteur (26), comprenant des disques de coupe (3) garnis de lames de coupe (27) entraînées à rotation autour d'axes de disques sensiblement verticaux (28), comprenant au moins deux unités de coupe (2, 2') qui sont guidées sur des bras pivotants, juxtaposées transversalement au sens de la marche et logées dans des articulations de repliage (10, 10') d'un bâti (6) pourvu d'axes de pivotement (11, 11') orientés sensiblement dans le sens de la marche et qui, au moyen d'un dispositif de pivotement hydraulique servocommandé (29, 29'), sont repliables d'une position de travail vers une position de transport et inversement, **caractérisé en ce que** les bras sont conformés en flèches télescopiques de longueur variable (7, 7'), le tube intérieur (36) étant guidé à coulissement à l'intérieur du tube extérieur (37), et le tube extérieur (37) étant logé, à pivotement autour des axes de pivotement (11, 11') des liaisons articulées (10, 10'), dans le bâti (6), et le tube intérieur (37) étant logé, à pivotement autour des axes de pivotement (16, 16') des liaisons articulées (15, 15'), dans l'unité de coupe correspondante (2, 2'), et les unités de coupe (2, 2') étant simultanément montées à pivotement autour d'un axe de pivotement (9 et/ou 9') d'une articulation (8, 8') proche du sol et située à l'extrémité de bras d'appui (12, 12'), et les bras d'appui (12, 12') étant eux aussi logés à pivotement, par leur autre extrémité, dans des liaisons articulées (13, 13') du bâti (6), la capacité de pivotement des bras d'appui (12, 12') dans la position de travail (A) autour des axes de pivotement (14, 14') des liaisons articulées (13, 13') pouvant être annulée au moyen d'un dispositif de verrouillage (38), et le dispositif de verrouillage (38) pouvant être libéré pour restaurer la capacité de pivotement des bras d'appui (12, 12') afin de replier les unités de coupe (2, 2') dans leur position de transport (T), de sorte que, du fait de leur capacité de pivotement, les bras d'appui déverrouillés (12, 12') remplissent la fonction d'un accouplement à bras oscillants par rapport aux unités de coupe (2, 2') et que, lorsqu'elles sont relevées dans leur position de transport (T), les unités de coupe (2, 2') effectuent donc, autour de leur axe de pivotement respectif (16, 16') de leur articulation (15, 15'), une rotation qui en réduit la largeur (B), et, en raison de la pesanteur et de la variabilité en longueur de leurs flèches télescopiques (7, 7'), les unités de coupe (2, 2') adoptent une position de transport (T) qui permet encore d'en réduire la hauteur de transport.

2. Mécanisme de coupe selon la revendication 1, **caractérisé en ce que**, dans la position de travail (A), les articulations (8, 8') se trouvent sensiblement dans le plan médian (25) du véhicule de transport (26) et sensiblement dans le plan médian (25) de deux unités de coupe voisines (2, 2') près du sol, sensiblement dans le plan de coupe des lames de coupe.

3. Mécanisme de coupe selon la revendication 1, **caractérisé en ce que** les unités de coupe (2, 2') sont surmontées d'un cadre-portique (5, 5'), et les articulations (15, 15') sont disposées sensiblement au milieu et au centre de gravité du cadre-portique (5, 5').

4. Mécanisme de coupe selon la revendication 1, **caractérisé en ce que**, pour limiter la course de coulissement engendrée par la libre mobilité entre le tube intérieur (36) et le tube extérieur (37), une flèche (7, 7') comporte un moyen de limitation à butées conformé en butée extérieure (34) et en butée intérieure (35).

5. Mécanisme de coupe selon la revendication 1 à 4, **caractérisé en ce que** les unités de coupe (2, 2') du mécanisme de coupe (1) sont repliables d'une position de travail (A) vers une position de transport (T) au moyen de vérins (29, 29') conformés en vérins plongeurs.

6. Mécanisme de coupe selon la revendication 1 à 5, **caractérisé en ce que** les bras d'appui (12, 12") sont disposés l'un à côté de l'autre parallèlement au sens de la marche (F).

7. Mécanisme de coupe selon la revendication 1 à 5, **caractérisé en ce que** les bras d'appui (12, 12') sont disposés l'un derrière l'autre par rapport au sens de la marche (F).

8. Mécanisme de coupe selon la revendication 5, **caractérisé en ce que** les articulations (13, 13') sont disposées l'une à côté de l'autre, à distance (39), par rapport au sens de la marche (F).

9. Mécanisme de coupe selon la revendication 6, **caractérisé en ce que** les articulations (13, 13") sont disposées l'une derrière l'autre de manière décalée par rapport au sens de la marche (F).

10. Mécanisme de coupe selon la revendication 9, **caractérisé en ce que** les axes de pivotement (14, 14') des articulations (13, 13') sont disposés l'un derrière l'autre de manière identique.

11. Mécanisme de coupe selon la revendication 8, **caractérisé en ce que** la distance (39) entre les articulations (8, 8') se situe dans une plage d'environ 0 mm à 150 mm.

12. Mécanisme de coupe selon une ou plusieurs des revendications précédentes, **caractérisé en ce que**, dans la position de travail (A), les articulations (8, 8') sont bloquées l'une par rapport à l'autre, à leur hauteur instantanée, par un verrouillage (55).

13. Mécanisme de coupe selon une ou plusieurs des revendications précédentes, **caractérisé en ce que**, dans leur position de transport (T), les unités de coupe (2, 2') sont bloquées, du point de vue de leur capacité de pivotement par rapport aux articulations (15, 15'), par les bras d'appui (12, 12').

14. Mécanisme de coupe selon une ou plusieurs des revendications précédentes, **caractérisé en ce que** les bras d'appui (12, 12') comportent des éléments amortisseurs précontraints (40).

15. Mécanisme de coupe selon la revendication 14, **caractérisé en ce que** les éléments amortisseurs (40) sont conformés en éléments de ressorts (41).

16. Mécanisme de coupe selon la revendication 15, **caractérisé en ce que** l'élément amortisseur (40) est conformé en ressort de pression précontraint (42).

17. Mécanisme de coupe selon une ou plusieurs des revendications précédentes, **caractérisé en ce que** les jambes d'appui sont conformées en vérins.

18. Mécanisme de coupe selon la revendication 14, **caractérisé en ce que** les éléments amortisseurs (40) sont conformés en ressorts de pression à gaz hydropneumatiques précontraints, de préférence en accumulateurs à vessie.

19. Mécanisme de coupe selon la revendication 14, **caractérisé en ce que** l'élément amortisseur (40) est conformé en ressort de pression à gaz précontraint associé à un amortisseur de chocs.

20. Mécanisme de coupe selon une ou plusieurs des revendications précédentes, **caractérisé en ce que** l'unité de coupe (2, 2') est reliée au cadre-portique (5, 5') près du sol avec une possibilité de pivotement autour de l'axe de pivotement (24).
